# EUROPEAN PATENT SPECIFICATION

(11) **EP 0 956 215 B1**
(45) Date of publication and mention of the grant of the patent: **12.06.2002**
(21) Application number: 98907978.5
(22) Date of filing: 23.01.1998
(51) Int. Cl.: B60J 5/04

(54) **VEHICLE DOOR MODULE**
MODUL FÜR KRAFTFAHRZEUGTÜR
MODULE PORTE POUR VEHICULE

(30) Priority: 29.01.1997 GB 9701780
(43) Date of publication of application: 17.11.1999
(73) Proprietor: Delphi Automotive Systems Deutschland GmbH, D-42369 Wuppertal (DE)
(72) Inventor: DANCASIUS, Michael, D-42105 Wuppertal (DE)
(74) Representative: Denton, Michael John
(86) International application number: EP9800359
(87) International publication number: WO9832621

(56) References cited:
- EP-A- 0 385 823
- EP-A- 0 561 440
- WO-A-94/03341
- DE-A- 3 217 640
- DE-A- 4 212 261

## Description

### TECHNICAL FIELD

This invention relates to a module for mounting on the inner panel of a door of a motor vehicle.

### BACKGROUND OF THE INVENTION

It is known to mount components, such as a window lift mechanism, door lock handle, loudspeaker, etc. on the inner panel of a door of a motor vehicle. Assembly of such components on the inner panel requires the formation of holes in the inner panel and can be very time consuming.

### SUMMARY OF THE INVENTION

It is an object of the present invention to provide an improvement to this known arrangement.

A module in accordance with the present invention is characterised by the features specified in claim 1.

With the present invention, the structural member provides rigidity and strength for the inner panel. Door components, such as a door latch and associated components, a loudspeaker, a window lift mechanism, etc. can be pre-assembled on the support panel and/or the structural member before the structural member is secured on the inner panel. This arrangement provides easier assembly of the door components on the door. By suitable selection of materials, the weight can be reduced without reducing the structural strength relative to the known arrangement described above.

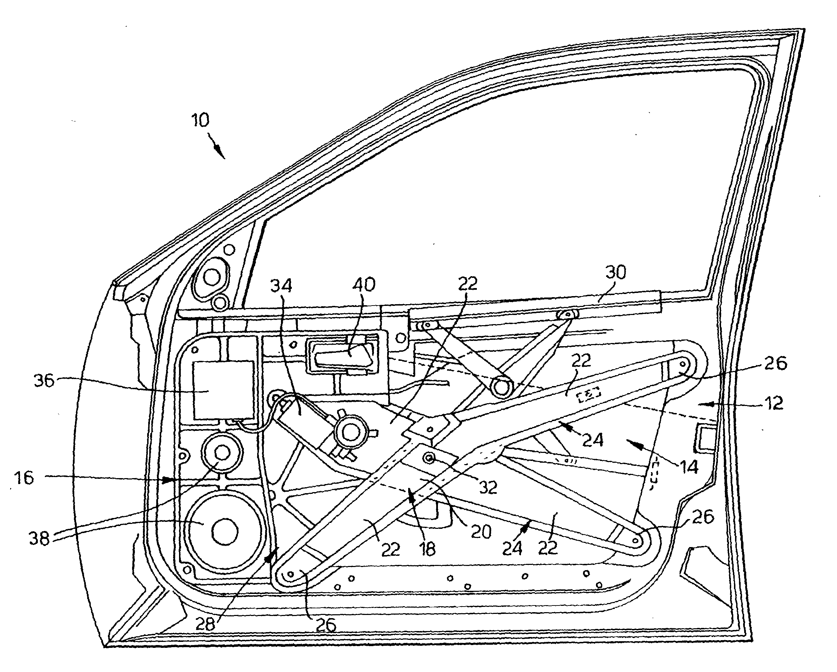

### BRIEF DESCRIPTION OF THE DRAWING

The present invention will now be described, by way of example, with reference to the accompanying drawing, in which the sole figure is a side view of a module in accordance with the present invention mounted in an aperture in the inner panel of a door of a motor vehicle.

### DESCRIPTION OF THE PREFERRED EMBODIMENT

The figure of the drawing shows a door 10 of a motor vehicle before the inner trim is fitted to the door. The door 10 comprises an inner panel 12 within which an aperture 14 has been formed. The module 16 in accordance with the present invention is mounted directly on the inner panel 12, as shown, or on a reinforcing member associated with the inner panel. The module 16 comprises a structural member 18 which is substantially X-shaped and which has a central portion 20 and four arms 22 extending away from the central portion. The structural member 18 is preferably formed from two members 24 which are joined or cross at their centres, each member being stamped from sheet steel or aluminium to have a substantially C-shaped cross-section. The free end 26 of each arm 22 is secured to the inner panel 12 such that the members 24 extend across the aperture 14, preferably substantially diagonally or diametrically. In an alternative arrangement, the structural member may be substantially T-shaped or Y-shaped and comprise three arms, at least two of which form a member 24 which extends across the aperture 14, preferably substantially diagonally or diametrically. In a further alternative arrangement, the structural member may comprise a single member 24 having two arms which extend away from the central portion in substantially opposed directions, and therefore extend across the aperture 14, preferably substantially diagonally or diametrically. In a still further alternative arrangement, the structural member may be formed from any other suitable metallic material (such as magnesium).

The module 16 further comprises a support panel 28 which is secured to the structural member 18 and to the inner panel 12. The support panel 28 can be formed in one-piece, or from several pieces which are joined together, and is preferably formed from plastics material. Various door components are mounted on the support panel 28 and the structural member 18. A window lift mechanism 30 is secured to the central portion 20 of the structural member 18 at the pivot point 32 of the window lift mechanism. An electric motor 34 for driving the window lift mechanism 30 is mounted on the support panel 28, or can be mounted on one of the arms 22 of the structural member 18. Control circuitry 36 for the electric motor 34, loudspeakers 38, and a door latch handle 40 are also mounted on the support panel 28. Other door components may be mounted on the support panel 28 and/or the structural member 18.

The window lift mechanism 30 can be secured to the structural member 18 prior to the mounting of the structural member on the inner panel 12. The electric motor 34, control circuitry 36, loudspeakers 38, and door latch handle 40 can be pre-assembled on the support panel 28 prior to the mounting of the support panel on the inner panel 12 and the structural member 18. The support panel 28 can be secured to the structural member 18 either prior to, or after, the mounting of the structural member on the inner panel 12.

The module 16 can therefore be pre-assembled before mounting on the inner panel 12. The structural member 18 provides strength and rigidity for the inner panel 12.

## Claims

1. A module (16) for mounting in an aperture (14) in the inner panel (12) of a door (10) of a motor vehicle, the module comprising a structural member (18) having a central portion (20) and at least two arms (22) extending away from the central portion in different directions, each arm having a free end (26) securable to the inner panel such that the or at least two of the arms extend across the aperture when mounted on the inner panel; a support panel (28) secured to the structural member; and at least one door component (34-40) mounted on the support panel and/or the structural member; wherein the structural member (18) is formed from steel or from aluminium or from magnesium; and wherein each arm (22) of the structural member has a substantially C-shaped cross-section.

2. A module as claimed in Claim 1, wherein the said arm or the said at least two of the arms (22) extend substantially diagonally or diametrically across the aperture (14).

3. A module as claimed in Claim 1 or Claim 2, wherein the free end (26) of each arm (22) is secured directly to the inner panel (12).

4. A module as claimed in any one of Claims 1 to 3, wherein the structural member (18) comprises four arms (22) such that the structural member is substantially X-shaped.

5. A module as claimed in any one of Claims 1 to 4, wherein the support panel (28) is formed from one or more pieces and from plastics material.

6. A module as claimed in any one of Claims 1 to 5, further comprising a window lift mechanism (30) mounted on the structural member (18) and/or the support panel (28).

7. A module as claimed in Claim 6, wherein the at least one door component comprises an electric motor (34) for driving the window lift mechanism (30) and control means (36) for controlling the operation of the electric motor.

8. A module as claimed in any one of Claims 1 to 7, wherein the at least one door component comprises a door latch and/or associated components (40), and/or a loudspeaker (38).

## Patentansprüche

1. Modul (16) zur Montage in einer Öffnung (14) in der Innentafel (12) einer Tür (10) eines Kraftfahrzeugs, wobei das Modul umfasst: ein Konstruktionselement (18), das einen zentralen Abschnitt (20) und mindestens zwei Arme (22) aufweist, die sich von dem zentralen Abschnitt aus in unterschiedliche Richtungen erstrecken, wobei jeder Arm ein freies Ende (26) aufweist, das an der Innentafel befestigt werden kann, so dass sich der oder mindestens zwei der Arme quer durch die Öffnung erstrecken, wenn es an der Innentafel montiert ist; eine Trägertafel (28), die an dem Konstruktionselement befestigt ist; und mindestens ein Türbauteil (34-40), das an der Trägertafel und/oder dem Konstruktionselement montiert ist, wobei das Konstruktionselement (18) aus Stahl oder aus Aluminium oder aus Magnesium gebildet ist; und wobei jeder Arm (22) des Konstruktionselements einen im Wesentlichen C-formigen Querschnitt aufweist.

2. Modul nach Anspruch 1, wobei der Arm oder die mindestens zwei der Arme (22) sich im Wesentlichen diagonal oder diametral quer durch die Öffnung (14) erstrecken.

3. Modul nach Anspruch 1 oder Anspruch 2, wobei das freie Ende (26) jedes Arms (22) direkt an der Innentafel (12) befestigt ist.

4. Modul nach einem der Ansprüche 1 bis 3, wobei das Konstruktionselement (18) vier Arme (22) umfasst, so dass das Konstruktionselement im Wesentlichen X-förmig ist.

5. Modul nach einem der Ansprüche 1 bis 4, wobei die Trägertafel (28) aus einem oder mehreren Stücken und aus Kunststoffmaterial gebildet ist.

6. Modul nach einem der Ansprüche 1 bis 5, das ferner einen Fensterhebermechanismus (30) umfasst, der an dem Konstruktionselement (18) und/oder der Trägertafel (28) montiert ist.

7. Modul nach Anspruch 6, wobei das mindestens eine Türbauteil einen Elektromotor (34) zum Antreiben des Fensterhebermechanismus (30) und ein Steuermittel (36) zum Steuern des Betriebes des Elektromotors umfasst.

8. Modul nach einem der Ansprüche 1 bis 7, wobei das mindestens eine Türbauteil eine Türverriegelung und/oder zugehörige Bauteile (40) und/oder einen Lautsprecher (38) umfasst.

## Revendications

1. Module (16) de montage dans une ouverture (14) dans le panneau intérieur (12) d'une porte d'un véhicule à moteur, ce module comprenant un organe structurel (18) présentant une partie centrale (20) et au moins deux bras (22) s'étendant à partir de la partie centrale dans différentes directions, chaque bras ayant une extrémité libre (26) pouvant être fixée au panneau intérieur, de sorte que les ou au moins deux des bras s'étendent à travers l'ouverture lorsqu'ils sont montés sur le panneau intérieur ; un panneau support (28) fixé à l'organe structurel ; et au moins un composant de porte (34 - 40) monté sur le panneau support et/ou sur l'organe structurel, dans lequel l'organe structurel (18) est formé en acier ou en aluminium ou en magnésium, et chaque bras (22) de l'organe structurel présente une section transversale profilée sensiblement en C.

2. Module selon la revendication 1, dans lequel le bras ou lesdits au moins deux des bras (22) s'étendent sensiblement en diagonale ou diamétralement à travers l'ouverture (14).

3. Module selon la revendication 1 ou 2, dans lequel l'extrémité libre (26) de chaque bras (22) est fixée directement au panneau intérieur (12).

4. Module selon l'une quelconque des revendications 1 à 3, dans lequel l'organe structurel (18) comprend quatre bras (22), de sorte que l'organe structurel est profilé sensiblement en X.

5. Module selon l'une quelconque des revendications 1 à 4, dans lequel le panneau support (28) est formé en une ou plusieurs pièces et en matière plastique.

6. Module selon l'une quelconque des revendications 1 à 5, comprenant de plus un mécanisme de lève - vitre (30) monté sur l'organe structurel (18) et/ou sur le panneau support (28).

7. Module selon la revendication 6, dans lequel au moins un composant de porte comporte un moteur électrique (34) d'entraînement du mécanisme de lève - vitre (30) , et des moyens de commande (36) pour commander le fonctionnement du moteur électrique.

8. Module selon l'une quelconque des revendications 1 à 7,dans lequel au moins un composant de porte comprend une serrure de porte et/ou des composants associés (40), et/ou un haut - parleur (38).
